# FASCICULE DE BREVET EUROPEEN

(11) **EP 1 509 307 B1**
(45) Date de publication et mention de la délivrance du brevet: **16.08.2006**
(21) Numéro de dépôt: 03757090.0
(22) Date de dépôt: 15.05.2003
(51) Int. Cl.: B01D 29/27, B01D 35/26

(54) **ENSEMBLE COMPACT DE FILTRATION POUR BASSIN DE PISCINES**
KOMPAKTE FILTEREINHEIT FÜR EIN SCHWIMMBECKEN
COMPACT FILTERING UNIT FOR A SWIMMING POOL BASIN

(30) Priorité: 05.06.2002 FR 0207043
(43) Date de publication de la demande: 02.03.2005
(73) Titulaire: PISCINES DESJOYAUX SA, 42480 La Fouillouse (FR)
(72) Inventeur: DESJOYAUX, Jean-Louis, F-42600 Chalain le Comtal (FR); DESJOYAUX, Pierre-Louis, F-42480 La Fouillouse (FR); JANDROS, Catherine, F-42580 L'Etrat (FR)
(74) Mandataire: Thivillier, Patrick
(86) Numéro de dépôt international: PCT/FR2003/001469
(87) Numéro de publication internationale: WO 2003/103799

(56) Documents cités:
- EP-A- 0 423 043
- US-A- 5 178 523
- US-A- 5 649 514
- US-B1- 6 387 252

## Description

L'invention se rattache au secteur technique de la filtration de l'eau des bassins de piscine.

D'une manière générale, la filtration est obtenue au moyen d'un ou plusieurs filtres qui peuvent être de structures diverses, les filtres étant montés en combinaison avec un circuit d'aspiration et de refoulement de l'eau.

Différentes solutions ont été proposées pour assurer cette fonction. Plus particulièrement, l'invention concerne un ensemble compact comprenant un compartiment de filtration en communication avec l'eau du bassin, et un compartiment de pompage situé à l'extérieur dudit bassin.

De manière parfaitement connue, cet ensemble constitue un bloc compact monté par exemple, en chevauchement des panneaux ou autres constituant la paroi du bassin de la piscine. L'eau, en provenance du bassin, est aspirée au travers d'au moins une bouche dénommée SKIMMER, que présente le compartiment de filtration immergé dans l'eau. L'eau ainsi aspirée passe au travers d'un organe de filtration et est refoulée dans le bassin de la piscine par des buses frontales et/ou latérales au moyen généralement d'une pompe installée dans l'autre compartiment situé à l'extérieur du bassin.

Les moyens de filtration peuvent être constitués notamment par une poche filtrante montée d'une manière amovible dans un bol ou puits constitué par un manchon cylindrique monté verticalement dans le compartiment immergé dans l'eau.

Cette solution ressort par exemple de l'enseignement du brevet FR EP 0423043. Le fond du cylindre est accouplé par l'intermédiaire d'une crépine à prise d'aspiration d'au moins une pompe située dans le compartiment externe. La communication entre le fond du cylindre, sous la poche filtrante, et la prise d'aspiration de la pompe, s'effectue au moyen d'une canalisation comme il ressort par exemple de l'enseignement du brevet FR 2799485.

Le raccordement de cette canalisation d'aspiration avec le fond du cylindre, est relativement délicat à réaliser. Il est nécessaire de prévoir un aménagement spécifique du fond du compartiment de filtration, nécessitant la mise en place d'un joint d'étanchéité. Par ailleurs, le puits cylindrique doit présenter des nervures de rigidité compte tenu des forces de dépression exercée par l'eau, tandis que le compartiment de filtration doit présenter des moyens aptes à assurer le centrage et le maintien dudit puits.

A partir de cet état de la technique, le problème que se propose de résoudre l'invention est de simplifier et de rationaliser la fabrication de l'ensemble du bloc notamment au niveau du compartiment de filtration, en supprimant notamment l'utilisation d'un puits cylindrique rapporté recevant l'organe de filtration ce qui, supprime par conséquence l'inconvénient résultant de la liaison du puits cylindrique avec la canalisation d'aspiration.

Pour résoudre un tel problème, il a été conçu et mis au point un ensemble compact de filtration, recevant au moins un organe de filtration et un compartiment situé à l'extérieur du bassin et recevant au moins une pompe , ledit compartiment est immergé dans l'eau et présente une bouche dénommée skimmer pour l'aspiration de l'eau par la pompe au travers de l'organe de filtration et des buses frontales et/ou latérales pour le refoulement de l'eau filtrée dans le bassin de la piscine,

Selon l'invention :
- au moins un réceptacle est formé directement à partir du fond du compartiment de filtration en délimitant un espace périphérique dans lequel est formé une canalisation;
- deux nervures entretoises relient le réceptacle à l'intérieur du compartiment sur la totalité de la hauteur dudit réceptacle, délimitant la canalisation ,
- le fond présente une ouverture de communication (1f) avec la canalisation;
- l'extrémité supérieure de la canalisation coopère avec des moyens de raccordement à une prise d'aspiration de la pompe.

Ces caractéristiques permettent de ne plus raccorder le fond du réceptacle recevant l'organe de filtration avec une canalisation rapportée.

Pour résoudre le problème posé du raccordement du réceptacle avec la prise d'aspiration, les moyens de raccordement de la canalisation sont constitués par un couvercle d'emboîtement emmanché à la partie supérieure de ladite canalisation, ledit couvercle présentant un manchon de raccordement apte à recevoir un élément de tuyauterie relié à une prise d'aspiration que présente au moins une pompe montée dans le compartiment de pompage.

Pour résoudre le problème posé de tenir compte des pressions exercées par l'eau, le réceptacle est relié à la l'intérieur du compartiment par des nervures de rigidité verticales.

Avantageusement, le réceptacle présente, au-dessus de l'ouverture de communication avec la canalisation d'aspiration, un élément de préfiltration sous forme d'une grille.

Selon une réalisation avantageuse, le réceptacle est constitué par un corps cylindrique formé directement à partir du fond du compartiment de filtration en délimitant un espace périphérique dans lequel sont formées les nervures de rigidité et la canalisation d'aspiration. Le moyen de filtration est constitué par une poche filtrante disposée à l'intérieur du réceptacle et fixée, d'une manière démontable, au niveau de l'ouverture dudit réceptacle.

Compte tenu des caractéristiques à la base de l'invention, dans une forme de réalisation préférée, les compartiments de filtration et de pompage, sont reliés par un élément faisant office de cadre, pour être situés de part et d'autre de la paroi considérée du bassin de piscine, le compartiment de filtration étant immergé dans l'eau tandis que le compartiment de pompage est enterrré.

Le cadre présente des agencements pour le passage des tuyauteries d'aspiration et de refoulement entre les deux compartiments de pompage et de filtration.

Le cadre reçoit un couvercle en deux parties pour accéder séparément à chacun des compartiments de filtration et de pompage.

Compte tenu du problème posé de diminuer de manière significative les coûts de production, chaque compartiment est obtenu par injection d'une matière plastique.

L'invention est décrite plus en détail, à l'aide des figures des dessins annexées dans lesquelles :
- Les figures 1 et 2 sont des vues en perspective d'une forme de réalisation non limitative du bloc compact de filtration selon les caractéristiques de l'invention.

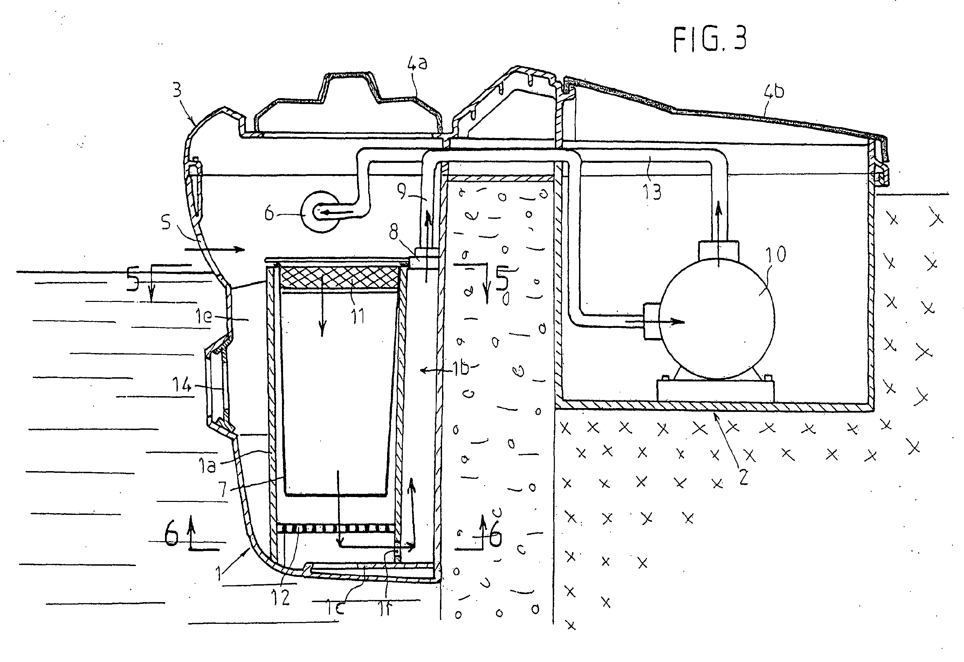

- la figure 3 est une vue en coupe longitudinale de l'ensemble du bloc.

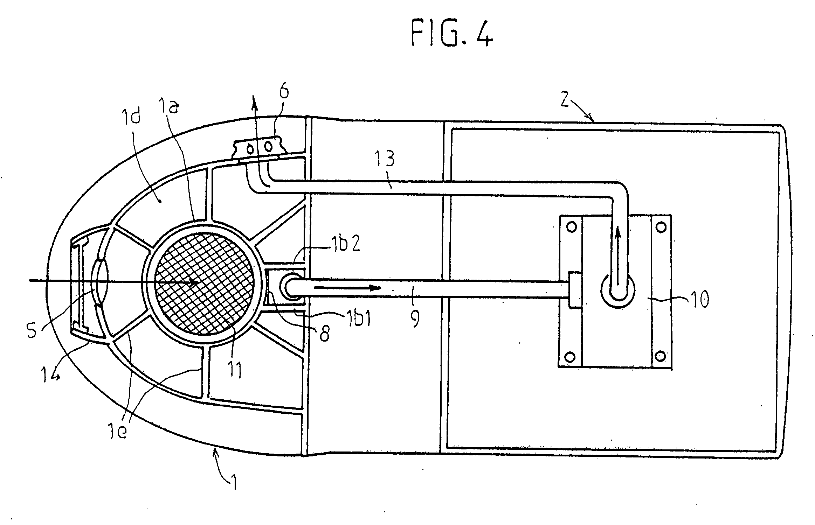

- La figure 4 est une vue en plan correspondant à la figure 3, le couvercle du compartiment de filtration étant enlevé.

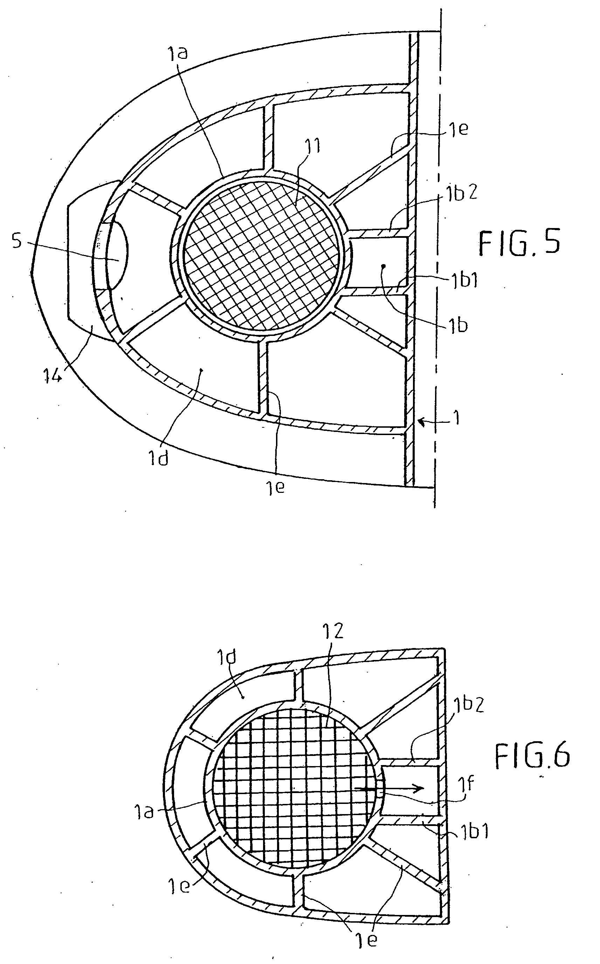

- Les figures 5 et 6 sont des vues en coupe transversale considérée respectivement selon les lignes 5-5 et 6-6 de la figure 3.

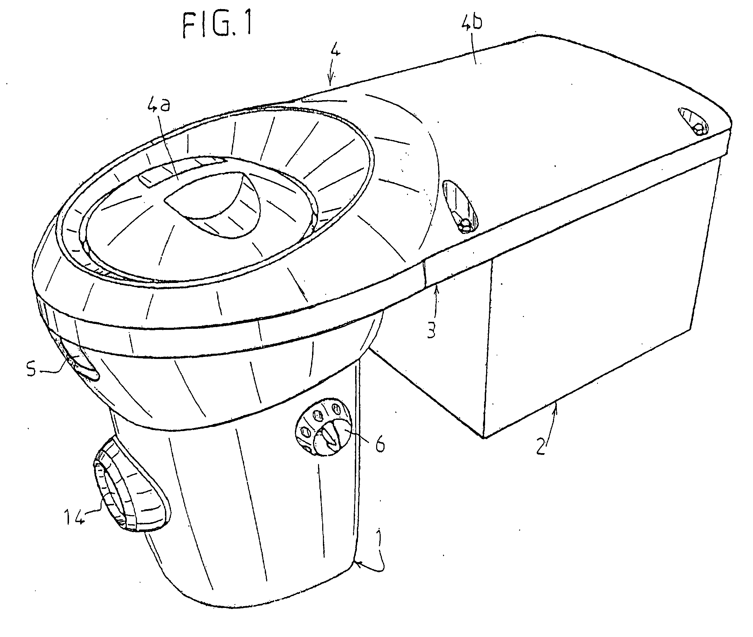

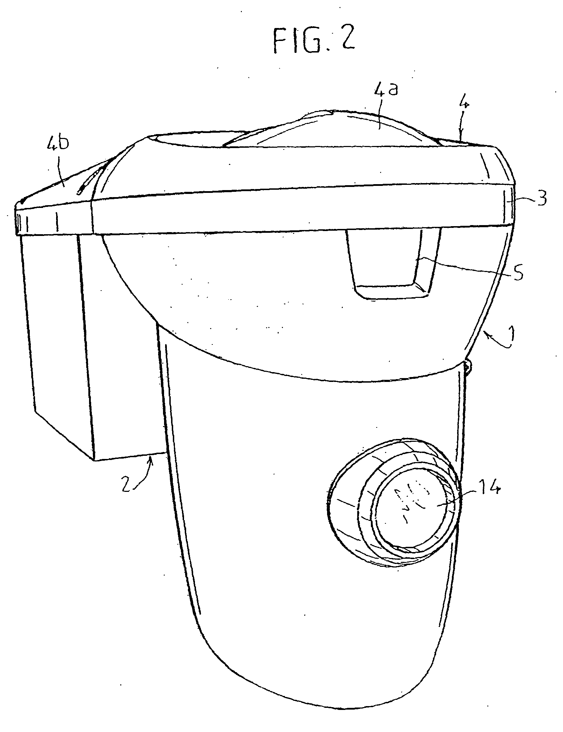

Comme illustré, les figures 1 et 2 montrent un exemple indicatif et nullement limitatif de l'ensemble compact de filtration pour bassin de piscine. Cet ensemble comprend un compartiment (1) immergé dans l'eau et recevant un moyen de filtration. Dans la suite de la description, ce compartiment (1) est dénommé compartiment de filtration. L'ensemble compact comporte un autre compartiment (2) situé à l'extérieur du bassin de la piscine, recevant un moyen de pompage. Dans la suite de la description, ce compartiment (2) est dénommé compartiment de pompage.

Dans un exemple de réalisation préférée et compte tenu du mode de fabrication du compartiment de filtration (1), les deux compartiments (1) et (2) sont indépendants l'un de l'autre et reliés par un élément (3) faisant office de cadre pour être situés de part et d'autre de la paroi considérée du bassin de piscine. Le cadre (3) reçoit un couvercle (4) en deux parties (4a) et (4b) pour accéder séparément au compartiment de pompage (2) et au compartiment de filtration (1).

D'une manière connue, le compartiment de filtration (1) qui est immergé dans l'eau, présente au moins une bouche d'aspiration ou « SKIMMER » (5), et au moins une buse de refoulement (6) disposée latéralement ou facialement.

Selon une caractéristique à la base de l'invention, le compartiment de filtration (1) présente directement lors de sa fabrication au moins un réceptacle (1a) apte à recevoir un moyen de filtration (7) par exemple sous forme d'une poche filtrante. Le réceptacle (1a) est situé sous la bouche d'aspiration (5) pour recevoir l'eau en provenance du bassin de la piscine, par aspiration, comme il sera indiqué dans la suite de la description. Dans ce but, le réceptacle (1a) est en communication à sa base avec des agencements (1b) formés directement lors de la fabrication du compartiment de filtration (1) et aptes à faire office de canalisation. La canalisation (1b) ainsi formée coopère avec des moyens de raccordement (8) au compartiment de pompage pour en aspirer l'eau au travers d'un moyen de filtration (7).

La canalisation (1b) est formée par deux nervures (1b1) (1b2) reliant le réceptacle (1) et l'intérieur du compartiment de filtration (1) sur la totalité de la hauteur dudit réceptacle (1a). Le réceptacle (1a) est constitué par un corps cylindrique formé directement à partir du fond (1c) du compartiment de filtration (1) en délimitant un espace périphérique (1d) dans lequel sont formées des nervures de rigidité (1e) et la canalisation (1b).

La base du corps cylindrique (1a) présente une ouverture de communication (1f) avec la canalisation (1b). L'extrémité supérieure de la canalisation (1b) coopère avec les moyens de raccordement (8) sous forme d'un couvercle monté d'une manière étanche au bout de ladite canalisation (1b). Le couvercle (8) présente un manchon de raccordement apte à recevoir, de manière étanche, une canalisation (9) reliée à la prise d'aspiration des moyens de pompage sous forme d'au moins une pompe (10).

Compte tenu de ces dispositions, il en résulte que le compartiment de filtration présente donc directement, lors de sa fabrication, les agencements internes nécessaires permettant de recevoir les moyens de filtration (7), supprimant par conséquent l'installation des canalisations de raccordement.

Les moyens de filtration sont avantageusement constitués par une poche filtrante (7) disposée à l'intérieur du cylindre (1a) et fixée de manière démontable, par tout moyen connu et approprié, au niveau de l'ouverture dudit cylindre. Après mise en place de la poche filtrante (7), cette dernière peut recevoir d'une manière connue un élément de préfiltration (11). Il est à noter que le cylindre (1a) peut présenter au-dessus de l'ouverture (1e) un élément de préfiltration sous forme d'une grille (12).

Compte tenu des caractéristiques à la base de l'invention, chacun des éléments constitutifs du bloc est obtenu par un procédé d'injection d'une matière plastique. C'est le cas notamment du compartiment de filtration (1) présentant directement lors de l'injection le cylindre (1a) et la canalisation (1b). Le compartiment de pompage (2), le cadre de raccordement (3) et les couvercles (4a) et (4b), peuvent également être obtenus par le procédé d'injection.

Bien évidemment, la pompe (10) est reliée par une canalisation (13) à la buse de refoulement (6). Le cadre de raccordement (3) du compartiment de filtration (1a) et du compartiment de pompage (2), présente tous types d'agencements appropriés, pour le passage des tuyauteries d'aspiration (9) et de refoulement (13) entre les deux compartiments (1) et (2).

Le fonctionnement de l'ensemble du bloc compact de filtration demeure classique. Après mise en route de la ou des pompes (10), l'eau du bassin de la piscine qui entre par le SKIMMER (5), est aspirée au travers de la poche filtrante (7) par la canalisation (1b) raccordé en (8) à la canalisation (9). L'eau ainsi filtrée est refoulée par la canalisation (13) au travers de la ou des buses (6).

Bien évidemment le compartiment de filtration (1) présente tous types d'agencements extérieurs, du type projecteurs (14), marches d'escalier .....

Les avantages ressortent bien de l'invention, ou souligne et on rappelle, la possibilité d'obtenir en une seule opération, le compartiment de filtration avec intérieurement tous les agencements nécessaires permettant la mise en place des organes de filtration en tant que tels, tout en permettant un raccordement dans la partie haute de la canalisation d'aspiration.

## Revendications

1. Ensemble compact de filtration de l'eau d'un bassin de piscine, ledit ensemble comprenant un compartiment (1) recevant au moins un organe de filtration (7) et un compartiment (2) situé à l'extérieur du bassin et recevant au moins une pompe (10), ledit compartiment (1) est immergé dans l'eau et présente une bouche dénommée skimmer (5) pour l'aspiration de l'eau par la pompe (10) au travers de l'organe de filtration et des buses frontales et/ou latérales (6) pour le refoulement de l'eau filtrée dans le bassin de la piscine,
***caractérisé en ce que** :*
- au moins un réceptacle (1a) est formé directement à partir du fond (1c) du compartiment de filtration (1) en délimitant un espace périphérique (1d) dans lequel est formé une canalisation (1b) ;
- deux nervures entretoises (1b1 - 1b2) relient le réceptacle (1a) à l'intérieur du compartiment (1) sur la totalité de la hauteur dudit réceptacle, délimitant la canalisation (1b) ;
- le fond (1c) présente une ouverture de communication (1f) avec la canalisation (1b) ;
- l'extrémité supérieure de la canalisation (1b) coopère avec des moyens (8) de raccordement à une prise d'aspiration de la pompe (10)

2. Ensemble compact de filtration selon la revendication 1, **caractérisé en ce que** les moyens de raccordement de la canalisation (1b) sont constitués par un couvercle d'emboîtement (8) emmanché à la partie supérieure de ladite canalisation (1b), ledit couvercle présentant un manchon de raccordement apte à recevoir un élément de tuyauterie (9) relié à la prise d'aspiration que présente la pompe (10).

3. Ensemble compact de filtration selon la revendication 1 **caractérisé en ce que** le réceptacle (1a) est relié à l'intérieur du compartiment (1) par des nervures de rigidité (1e).

4. Ensemble compact de filtration selon la revendication 1, **caractérisé en ce que** le réceptacle (1a) présente, au-dessus de l'ouverture de communication (1f) avec la canalisation d'aspiration (1b), un élément de préfiltration (12) sous forme d'une grille.

5. Ensemble compact de filtration selon la revendication 3, **caractérisé en ce que** le réceptacle (1a) est constitué par un corps cylindrique formé directement à partir du fond du compartiment de filtration (1) en délimitant un espace périphérique (1d) dans lequel sont formées les nervures de rigidité (1e) et la canalisation d'aspiration (1b).

6. Ensemble compact de filtration selon la revendication 1, **caractérisé en ce que** le ou les organe(s) de filtration (7) est(sont) constitué(s) par une poche filtrante disposée à l'intérieur du réceptacle (1a) et fixée, d'une manière démontable, au niveau de l'ouverture dudit réceptacle (1a).

7. Ensemble compact de filtration selon la revendication 1, **caractérisé en ce que** les compartiments de filtration (1) et de pompage (2), sont reliés par un cadre (3) pour être situés de part et d'autre de la paroi considérée du bassin de piscine, le compartiment de filtration (1) étant immergé dans l'eau tandis que le compartiment de pompage (2) est enterré.

8. Ensemble compact de filtration selon la revendication 7, **caractérisé en ce que** le cadre (3) présente des agencements pour le passage des tuyauteries d'aspiration (9) et de refoulement (13) entre les deux compartiments de pompage (2) et de filtration (1).

9. Ensemble compact de filtration selon la revendication 7, **caractérisé en ce que** le cadre (3) reçoit un couvercle (4) en deux parties pour accéder séparément à chacun des compartiments de filtration (1) et de pompage (2).

10. Ensemble compact de filtration selon la revendication 1, **caractérisé en ce que** chaque compartiment est obtenu par injection d'une matière plastique.

## Claims

1. A compact water filtration unit for a swimming pool, said unit comprising a compartment (1) accommodating at least one filtering device (7) and a compartment (2) located outside the pool and accommodating at least one pump (10), said compartment (1) being immersed in the water and having an opening called a skimmer (5) in order to suck in water by means of pump (10) through the filtering device and frontal and/or lateral nozzles (6) in order to discharge the filtered water into the swimming pool, ***characterised in that**:*
- at least one receptacle (1a) is formed directly on the bottom (1c) of the filtration compartment (1) defining a peripheral space (1d) in which there is a channel (1b);
- two spacer ribs (1b1-1b2) link receptacle (1a) to the interior of compartment (1) over the entire height of said receptacle, and define channel (1b);
- the bottom (1c) has an opening (1f) that communicates with channel (1b);
- the upper end of channel (1b) cooperates with the means (8) of connection to a suction inlet of pump (10).

2. A compact filtration unit as claimed in claim 1, **characterised in that** the means of connecting the channel (1b) consist of an interlocking cover (8) fitted on the upper part of said channel (1b), said cover having a conduit coupling sleeve capable of accommodating a length of pipe (9) connected to the suction inlet of the pump (10).

3. A compact filtration unit as claimed in claim 1, **characterised in that** the receptacle (1a) is connected to the interior of compartment (1) by reinforcing ribs (1e).

4. A compact filtration unit as claimed in claim 1, **characterised in that** receptacle (1a) has, above the opening (1f) that communicates with inlet channel (1b), a prefilter element (12) in the form of a mesh.

5. A compact filtration unit as claimed in claim 3, **characterised in that** receptacle (1a) consists of a cylindrical body formed directly on the bottom of filter compartment (1) by defining a peripheral space (1d) in which reinforcing ribs (1e) and inlet channel (1b) are formed.

6. A compact filtration unit as claimed in claim 1, **characterised in that** the filtering device(s) (7) consists/consist of a filter bag located inside receptacle (1a) and removably fixed to the opening of said receptacle (1a).

7. A compact filtration unit as claimed in claim 1, **characterised in that** the filtration (1) and pumping (2) compartments are connected by a frame (3) so that they are located either side of the wall in question of the pool, the filtration compartment (1) being immersed in the water whereas the pumping compartment (2) is buried.

8. A compact filtration unit as claimed in claim 7, **characterised in that** the frame (3) has features for routing the inlet (9) and discharge (13) pipes between the two pumping (2) and filtration (1) compartments.

9. A compact filtration unit as claimed in claim 7, **characterised in that** the frame (3) accommodates a 2-part cover (4) to allow separate access to each of the filtration (1) and pumping (2) compartments.

10. A compact filtration unit as claimed in claim 1, **characterised in that** each compartment is obtained by injection moulding a plastic material.

## Patentansprüche

1. Kompakte Filtereinheit für das Wasser eines Schwimmbeckens, wobei die Einheit eine Kammer (1) besitzt, die mindestens ein Filterorgan (7) aufnimmt, und eine Kammer (2), die sich außerhalb des Beckens befindet, und mindestens eine Pumpe (10) aufnimmt, wobei die Kammer (1) in das Wasser eingetaucht ist und einen Auslauf, genannt Skimmer (5), zum Ansaugen von Wasser über das Filterorgan durch die Pumpe (10) und vordere und/oder seitliche Düsen (6) zum Fördern von gefiltertem Wasser in das Schwimmbecken besitzt,
**dadurch gekennzeichnet, dass**
- mindestens ein Aufnahmebehälter (1a) direkt am Boden (1c) der Filterkammer (1) gebildet wird und einen Umfangsraum (1d) begrenzt, in dem eine Leitung (1b) gebildet wird;
- über die gesamte Höhe des Aufnahmebehälters zwei Verstrebungen (1b1 - 1b2) den Aufnahmebehälter (1a) mit dem Innern der Kammer (1) verbinden und die Leitung (1b) begrenzen;
- der Boden (1c) eine Verbindungsöffnung (1f) mit der Leitung (1b) besitzt;
- das obere Ende der Leitung (1b) mit Verbindungselementen (8) zu einer Ansaugstelle der Pumpe (10) zusammenwirkt.

2. Kompakte Filtereinheit nach Anspruch 1, **dadurch gekennzeichnet, dass** die Verbindungselemente der Leitung (1b) aus einem Aufsteckdeckel (8) bestehen, der auf den oberen Teil der Leitung (1b) aufgesteckt wird, wobei der Deckel einen Verbindungsstutzen besitzt, der ein Rohrleitungselement (9) aufnehmen kann, das mit der Ansaugstelle der Pumpe (10) verbunden ist.

3. Kompakte Filtereinheit nach Anspruch 1, **dadurch gekennzeichnet, dass** der Aufnahmebehälter (1a) mit dem Innern der Kammer (1) über Versteifungsrippen (1e) verbunden ist.

4. Kompakte Filtereinheit nach Anspruch 1, **dadurch gekennzeichnet, dass** der Aufnahmebehälter (1a) oberhalb der Verbindungsöffnung (1f) mit der Ansaugleitung (1b) ein Präfiltrationselement (12) in Form eines Gitters besitzt.

5. Kompakte Filtereinheit nach Anspruch 3, **dadurch gekennzeichnet, dass** der Aufnahmebehälter (1a) aus einem Zylindergehäuse besteht, das direkt am Boden der Filterkammer (1) gebildet wird, indem es einen Umfang (1d) begrenzt, in dem die Versteifungsrippen (1e) und die Ansaugleitung (1b) gebildet werden.

6. Kompakte Filtereinheit nach Anspruch 1, **dadurch gekennzeichnet, dass** das Filterorgan (7) oder die Filterorgane (7) aus einem Filtersack bestehen, der im Innern des Aufnahmebehälters (1a) angeordnet und demontierbar im Bereich der Öffnung des Aufnahmebehälters (1a) befestigt ist.

7. Kompakte Filtereinheit nach Anspruch 1, **dadurch gekennzeichnet, dass** die Filterkammer (1) und die Pumpkammer (2) über einen Rahmen (3) verbunden sind, so dass sie zu beiden Seiten der jeweiligen Wand des Schwimmbeckens angeordnet sind, wobei die Filterkammer (1) in das Wasser eingetaucht ist, während die Pumpkammer (2) unterirdisch angeordnet ist.

8. Kompakte Filtereinheit nach Anspruch 7, **dadurch gekennzeichnet, dass** der Rahmen (3) Anordnungen für den Durchgang der Ansaugrohrleitungen (9) und der Förderleitungen (13) zwischen der Pumpkammer (2) und der Filterkammer (1) besitzen.

9. Kompakte Filtereinheit nach Anspruch 7, **dadurch gekennzeichnet, dass** der Rahmen (3) einen zweiteiligen Deckel (4) aufnimmt, um zu der Filterkammer (1) und der Pumpkammer (2) jeweils getrennt Zugang zu erhalten.

10. Kompakte Filtereinheit nach Anspruch 1, **dadurch gekennzeichnet, dass** es sich bei jeder Kammer um ein Kunststoffspritzteil handelt.
